(19) Europäisches Patentamt / European Patent Office / Office européen des brevets

(11) **EP 0 992 817 B1**

(12) **FASCICULE DE BREVET EUROPEEN**

(45) Date de publication et mention
de la délivrance du brevet:
**02.01.2008 Bulletin 2008/01**

(51) Int Cl.:
***G02B 6/02*** *(2006.01)*     ***G02B 6/036*** *(2006.01)*

(21) Numéro de dépôt: **99402416.4**

(22) Date de dépôt: **04.10.1999**

(54) **Fibre optique monomode à dispersion décalée à grande aire effective**

Dispersionsverschobene monomodige optische Faser mit grosser effektiver fläche

Dispersion-shifted optical fiber with large effective area

(84) Etats contractants désignés:
**AT BE CH CY DE DK ES FI FR GB GR IE IT LI LU MC NL PT SE**

(30) Priorité: **05.10.1998 FR 9812431**

(43) Date de publication de la demande:
**12.04.2000 Bulletin 2000/15**

(73) Titulaire: **Draka Comteq B.V.**
**1083 HJ Amsterdam (NL)**

(72) Inventeurs:
• **Sauvageon, Raphaelle Béthanie**
**74230 Thones (FR)**
• **Rousseau, Jean-Claude**
**78400 Chatou (FR)**
• **Chariot, Jean-François**
**78160 Marly Le Roi (FR)**
• **Nouchi, Pascale**
**78600 Maisons Laffite (FR)**
• **De Montmorillon, Louis-Anne**
**75017 Paris (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 859 247**     **WO-A-97/33188**

• **MASAO KATO, KENJI KUROKAWA, YOSHIAKI MIYAJIMA: "A new design for dispersion-shifted fiber with an effective core area larger than 100um2 and a good bending characteristics" OFC'98 TECHNICAL DIGEST, 22 - 27 février 1998, pages 301-302, XP002104987**
• **Y. LIU, W.B. MATTINGLY, D.K. SMITH, C.E. LACY, J.A. CLINE, E.M. DE LISO: "Design and fabrication of locally dispersion-flattened large effective area fibers" EUROPEAN CONFERENCE ON OPTICAL COMMUNICATION, ECOC '98, vol. 1, 20 - 24 septembre 1998, pages 37-38, XP002106023 Madrid, Spain**
• **Y. LIU, G. BERKEY: "Single-mode dispertion-shifted fibers with effective area over 100um2" EUROPEAN CONFERENCE ON OPTICAL COMMUNICATION, ECOC '98, vol. 1, 20 - 24 septembre 1998, pages 41-42, XP002106024 Madrid, Spain**
• **NOUCHI P ET AL: "New dispersion shifted fiber with effective area larger than 90 mu m/sup 2/" PROCEEDINGS OF THE EUROPEAN CONFERENCE ON OPTICAL COMMUNICATION, vol. 1, 1 janvier 1996 (1996-01-01), pages 49-52, XP002092143**

**EP 0 992 817 B1**

**Description**

La présente invention concerne les fibres optiques, et notamment les fibres à dispersion décalée destinées à être utilisées dans des systèmes de transmission en multiplexage en longueur d'ondes.

Les fibres optiques monomodes dites à dispersion décalée (DSF ou "Dispersion Shifted Fibers") sont utilisées à des longueurs d'onde voisines de 1550 nm, et plus généralement dans une fenêtre de longueurs d'onde de 1500 à 1600 nm. A ces longueurs d'onde, la dispersion chromatique de la silice n'est pas nulle (contrairement à ce qui est le cas dans la fenêtre de transmission située autour de 1300 nm). Afin de limiter la dispersion chromatique de l'onde transmise dans la fenêtre de transmission des fibres DSF, on compense la dispersion chromatique de la silice notamment par une augmentation de l'écart d'indice $\Delta n$ entre le coeur de la fibre et sa gaine optique. Cet écart d'indice permet en pratique de décaler la longueur d'onde d'annulation de la dispersion chromatique; il est obtenu par l'introduction de dopants dans la fibre, lors de la fabrication de celle-ci, par exemple par un processus de MCVD connu en soi, et qui n'est pas décrit plus en détail ici. Une valeur typique pour la différence d'indice entre la gaine et le coeur de la fibre est $10.10^{-3}$ à $14.10^{-3}$ ; l'augmentation de l'indice dans la silice peut être obtenue en utilisant comme dopant du germanium.

Les fibres monomodes à dispersion décalée doivent en outre présenter, tout comme les fibres de ligne classiques, de faibles pertes par courbure et une faible atténuation.

Par ailleurs, l'utilisation des fibres à dispersion décalée dans des systèmes de transmission à multiplexage de longueurs d'onde, à impulsions RZ, NRZ ou du type solitons, implique encore d'autres contraintes, d'autant plus qu'augmentent le nombre de canaux émis, le débit par canal, et les puissances après amplificateur et que diminue l'espacement entre canaux. Ainsi, il est préférable de disposer d'une fibre présentant une dispersion chromatique suffisamment élevée dans la fenêtre de transmission pour éviter le phénomène de mélange quatre ondes. On utilise donc des fibres présentant une longueur d'onde $\lambda_0$ d'annulation de la dispersion chromatique différente de 1550 nm pour éviter les problèmes apportés par le mélange à quatre ondes. Ces fibres sont appelées NZ-DSF (pour « Non-Zero Dispersion Shifted Fiber »).

Enfin, il est nécessaire, pour éviter les effets non linéaires, que ces fibres présentent une surface effective de mode importante, typiquement supérieure à 70 $\mu m^2$.

M. Kato et autres, A new design for dispersion shifted fiber with an effective core area larger than 100 $\mu m^2$ and good bending characteristics, ThK1, OFC'98 Technical Digest, explique que les effets non linéaires dans les fibres pourraient devenir les limitations dominantes du point de vue de la capacité et de la distance de transmission pour des systèmes de transmission amplifiés à haute capacité et sur de longues distances. Ce document précise qu'une solution possible consiste à augmenter la surface effective des fibres, ce qui permet d'obtenir une puissance supérieure et un intervalle plus important entre répéteurs. Ce document propose une fibre présentant un profil dit coaxial, entouré d'un piédestal, avec une surface effective de 146 $\mu m^2$ et une longueur d'onde $\lambda_0$ d'annulation de la dispersion chromatique de 1500 nm. La dispersion chromatique à 1550 nm est faible, et la pente de dispersion à cette longueur d'onde est de 0, 09 ps/nm$^2$.km.

EP-A-0 789 255 décrit des fibres à dispersion décalée, avec des fortes valeurs de surface effective, supérieures à 200 $\mu m^2$. Ces fibres présentent des longueurs d'onde $\lambda_0$ supérieures à 1550 nm. Un exemple de famille de fibres présente une valeur de $\lambda_0$ à 1580 nm, une aire effective à 265 $\mu m^2$, et une pente de dispersion chromatique de 0,085 ps/nm$^2$.km.

Dans ces deux documents connus, les fibres décrites présentent l'inconvénient d'avoir une dispersion chromatique trop faible à 1550 nm ; cette valeur de la dispersion chromatique à 1550 nm ne permet pas d'éviter le mélange à quatre ondes.

Le but de l'invention est de réaliser une fibre à dispersion décalée et à forte surface effective de mode ayant également une dispersion chromatique à 1550 nm suffisamment élevée pour éviter le mélange à quatre ondes.

L'invention propose à cet effet une fibre optique monomode à dispersion décalée, présentant les caractéristiques définies dans la revendication 1 ou 9.

Dans un mode de réalisation, la longueur d'onde $\lambda_0$ d'annulation de la dispersion chromatique est comprise entre 1450 et 1480 nm.

Avantageusement, la fibre présente une dispersion chromatique comprise entre 7,5 et 10 ps/nm.km pour une longueur d'onde de 1550 nm.

Dans un mode de réalisation, la fibre présente une surface effective comprise entre 110 et 125 $\mu m^2$.

Dans un autre mode de réalisation, la fibre présente une atténuation inférieure ou égale à 0,1 dB à une longueur d'onde de 1670 nm, pour un enroulement de 100 tours de fibre autour d'un rayon de 30 mm.

Dans un premier mode de réalisation, la fibre selon l'invention présente un profil d'indice avec un coeur entouré d'une gaine optique, ledit coeur comprenant disposés de manière coaxiale en partant de l'axe de la fibre :

- une partie centrale en forme de trapèze
- une zone intermédiaire d'indice inférieur à l'indice maximal de la partie centrale
- un anneau d'indice inférieur à l'indice maximal de la partie centrale et supérieur à celui de la zone intermédiaire.

Avantageusement, le profil présente entre l'anneau et la gaine une seconde zone intermédiaire d'indice inférieur à celui de la gaine.

Dans un deuxième mode de réalisation, la fibre selon l'invention présente un profil d'indice avec un coeur entouré d'une gaine optique, ledit coeur comprenant, disposés de manière coaxiale en partant de l'axe de la fibre :

- une partie centrale d'indice inférieur ou sensiblement égal à celui de la gaine
- une zone périphérique d'indice supérieur à celui de la partie centrale
- une zone intermédiaire d'indice inférieur à celui de la partie centrale
- un anneau d'indice supérieur à celui de la gaine.

D'autres caractéristiques et avantages de l'invention apparaîtront à la lecture de la description qui suit de modes de réalisation de l'invention, donnée à titre d'exemple et en référence aux dessins annexés, dans lesquels :

- la figure 1 montre une représentation schématique du profil d'indice d'une fibre selon un premier mode de réalisation de l'invention,
- la figure 2 montre une représentation schématique du profil d'indice d'une fibre selon un deuxième mode de réalisation de l'invention.

La fibre selon l'invention présente une surface effective importante, supérieure à 100 $\mu m^2$, et une longueur d'onde $\lambda_0$ d'annulation de la dispersion chromatique comprise entre 1400 et 1480 nm. Une valeur de $\lambda_0$ comprise entre 1450 et 1480 nm, par exemple autour de 1480 nm comme dans l'exemple de la figure s'avère appropriée pour des transmissions en multiplexage de longueurs d'ondes. Des valeurs de surface effective entre 110 et 125 $\mu m^2$ sont adaptées.

L'invention propose en outre que la dispersion chromatique à 1550 nm soit comprise entre 7,5 et 10 ps/nm.km. Ces valeurs permettent de limiter le mélange à quatre ondes dans les plages de transmission actuelles, et notamment entre 1530 et 1580 nm pour des systèmes de transmission à multiplexage de longueurs d'onde.

Enfin, l'invention propose une fibre dont la sensibilité aux courbures est similaire à celle des fibres de l'art antérieur, voire meilleure. Des valeurs de $\lambda_s$ au-delà de 1600 nm, et par exemple de l'ordre de 1670 nm, sont appropriées. On note $\lambda_s$ la valeur de la longueur d'onde pour laquelle l'atténuation provoquée par l'enroulement de 100 tours de fibre autour d'un rayon de 30 mm atteint 0,1 dB. L'invention permet ainsi de réaliser une fibre présentant un incrément d'atténuation inférieur à 0,05 dB à 1550 nm pour un enroulement de 100 tours de fibre autour d'un rayon de 30 mm.

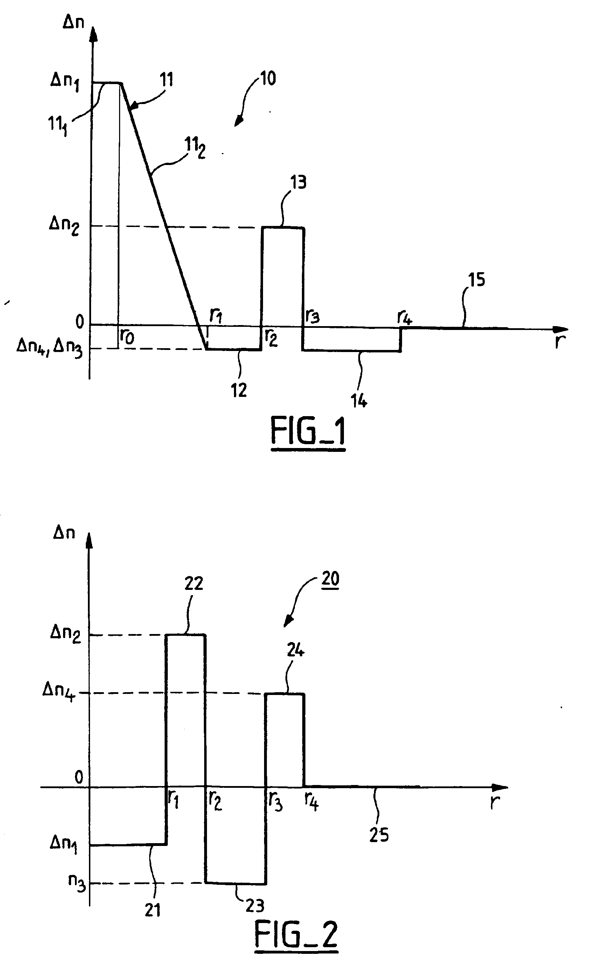

La figure 1 montre une représentation schématique d'un profil d'indice 10 qui peut être utilisé pour obtenir les caractéristiques de l'invention. Les abscisses montrent les rayons en $\mu m$, et les ordonnées montrent l'indice, défini par sa différence par rapport à l'indice de la gaine de la fibre, en valeur relative ($\Delta n$) ou en pour cent ($\Delta n\% = 100. \Delta n/n$).

Le profil d'indice de la figure 1 est un profil d'indice du type trapèze + anneau. Ce profil comporte, en partant du centre de la fibre vers la gaine, une partie centrale $11_1$ présentant un indice, ou plus exactement une différence d'indice $\Delta n_1$ sensiblement constante, jusqu'à un rayon $r_0$. L'indice $\Delta n_1$ est supérieur à l'indice $n_c$ de la silice de la gaine 15. Dans le mode de réalisation de la figure, l'indice $\Delta n_1$ vaut de 0,75 % à 0,85 % et le rayon $r_0$ vaut 0,84 $\mu m$.

Autour de cette partie centrale $11_1$ d'indice supérieur à celui de la gaine 15, la fibre de l'invention présente une partie $11_2$ d'indice décroissant linéairement ou sensiblement linéairement, entre les rayons $r_0$ et $r_1$; avec la partie centrale $11_1$, cette partie $11_2$ d'indice décroissant linéairement constitue un trapèze 11. L'indice $r_1$ peut prendre des valeurs entre 2,75 et 2,85 $\mu m$ ; on peut prévoir que la partie du trapèze 11 d'indice constant ou sommet du trapèze, représente de l'ordre de 0,3 fois le rayon total du trapèze, soit par exemple un rapport $r_0/r_1$ entre 0,2 et 0,5.

La fibre présente ensuite une première zone intermédiaire 12 d'indice $\Delta n_3$ sensiblement constant et inférieur ou égal à l'indice de la gaine 15, pour les rayons $r_1$ à $r_2$. Dans le mode de réalisation de la figure, la différence d'indice $\Delta n_3$ vaut - 0,02 %, et le rayon $r_2$ peut prendre des valeurs entre 4,8 et 5,1 $\mu m$. Plus généralement, des valeurs de $\Delta n_3$ entre - 0,01 et - 0,03 % sont appropriées.

La fibre présente autour de cette première zone intermédiaire 12 un anneau 13 d'indice $\Delta n_2$, supérieur à celui de la gaine 15. Dans le mode de réalisation de la figure 1, l'anneau 13 présente un indice $\Delta n_2$ de 0,45 % à 0,52 %, entre des rayons $r_2$ et $r_3$. L'indice $\Delta n_2$ de l'anneau est de préférence inférieur ou égal à l'indice $\Delta n_1$ de la partie centrale $11_1$ du trapèze. Le rayon $r_3$ à l'extérieur de l'anneau 13 est de préférence compris entre 6,1 et 6,6 $\mu m$.

A l'extérieur de l'anneau 13, la fibre présente avant la gaine 15 une deuxième zone intermédiaire 14 d'indice inférieur ou égal à celui de la gaine 15. Dans l'exemple de la figure 1, l'indice $\Delta n_4$ de cette deuxième zone intermédiaire 14 présente le même indice - 0,02 % (ou de préférence compris entre - 0,03 et - 0,01 %) que la première zone intermédiaire 12 entre le trapèze 11 et l'anneau 13. Cette deuxième zone intermédiaire 14 s'étend entre les rayons $r_3$ et $r_4$, avec $r_4$ entre 12,4 et 13,1 $\mu m$.

Ce choix de profil d'indice assure à la fibre une forte surface effective, comprise entre 110 et 125 $\mu m^2$ et une valeur $\lambda_0$ de la longueur d'onde d'annulation de la dispersion chromatique entre 1450 et 1480 nm. On peut ainsi, pour un système de transmission en multiplexage de longueurs d'onde, augmenter la puissance des amplificateurs, et diminuer la distance entre répéteurs d'un système de transmission utilisant comme milieu de transmission la fibre optique de l'invention.

Dans l'exemple précédent, la dispersion chromatique vaut 8,8 ps/nm.km à 1550 nm, et est ainsi comprise entre les valeurs préférées de 7,5 à 10,0 ps/nm.km.

Avantageusement, l'atténuation dans la fibre est suffisamment faible pour permettre une bonne câblabilité ; pour cela, il est avantageux que la longueur d'onde $\lambda_s$ de la fibre soit supérieure ou égale à 1670 nm, ou, de façon équivalente, que l'atténuation provoquée par les courbures soit inférieure à 0,1 dB en dessous de cette valeur de longueur d'onde.

Un autre exemple possible de profil en trapèze + anneau tel que celui de la figure 1 présente les paramètres donnés dans le Tableau 1 suivant.

Tableau 1

| $r_0$ ($\mu$m) | $r_1$ ($\mu$m) | $r_2$ ($\mu$m) | $r_3$ ($\mu$m) | $10^3.\Delta n_1$ | $10^3.\Delta n_2$ | $10^3.\Delta n_3$ | $10^3.\Delta n_4$ |
|---|---|---|---|---|---|---|---|
| 0,68 | 2,27 | 4,61 | 5,98 | 13,7 | 8,5 | 0 | 0 |

Les caractéristiques de propagation de la fibre ayant les paramètres du Tableau 1 sont données dans le Tableau 2 suivant, avec les notations suivantes :

$\lambda_c$ : longueur d'onde de coupure théorique
$\lambda_0$ : longueur d'onde d'annulation de la dispersion chromatique
$dC/d\lambda$ : pente de la dispersion chromatique à 1550 nm
DC : dispersion chromatique à 1550 nm
$W_{02}$ : diamètre de mode à 1550 nm
$S_{eff}$ : surface effective de mode à 1550 nm
$S_c$ : sensibilité aux courbures pour 100 tours sur un rayon de 30 mm à 1550 nm
$S_{\mu c}$ : sensibilité aux microcourbures donnée en proportion par rapport à la fibre G652, commercialisée par la demanderesse sous cette référence à 1550 nm

Tableau 2

| $\lambda_c$ (nm) | $\lambda_0$ (nm) | $DC/d\lambda$ (ps/nm$^2$.km) | DC (ps/nm.km) | $2W_{02}$ ($\mu$m) | $S_{eff}$ ($\mu$m$^2$) | $S_c$ (dB) | $S_{\mu c}$ |
|---|---|---|---|---|---|---|---|
| 1780 | 1475 | 0,1 | 8 | 10,6 | 109 | < $10^{-5}$ | 1,2 |

La longueur d'onde de coupure théorique est généralement supérieure de deux à quatre centaines de nanomètres à la longueur d'onde de coupure effectivement mesurée sur la fibre dans le câble qui la contient. De ce fait, la longueur d'onde de coupure en câble de la fibre selon l'invention est inférieure à 1500 nm, et la fibre selon l'invention est effectivement monomode dans la plage du multiplex.

De manière plus générale, on peut considérer que l'on peut choisir les paramètres des fibres selon l'invention présentant un profil du type trapèze + anneau de la manière suivante pour satisfaire aux exigences de l'invention :

$$9.10^{-3} \leq \Delta n_1 \leq 17.10^{-3}$$

$$3.10^{-3} \leq \Delta n_2 \leq 10,5.10^{-3}$$

$$-0,5.10^{-3} \leq \Delta n_3 \leq 0,5.10^{-3}$$

Le choix des différences d'indice dans les intervalles ci-dessus peut conduire pour les rayons aux intervalles suivants :

$$0,35 \leq r_1/r_3 \leq 0,5$$

$$0,55 \leq r_2/r_3 \leq 0,85$$

$$5\,\mu m \leq r_3 \leq 7,5\,\mu m.$$

La figure 2 montre une représentation schématique d'un profil d'indice 20 qui peut être utilisé pour obtenir les caractéristiques de l'invention. Les abscisses montrent les rayons en $\mu$m, et les ordonnées montrent les indices, en différence absolue $\Delta$n par rapport à l'indice de la gaine optique.

Le profil d'indice de la figure 2 est un profil d'indice du type coaxial. Ce profil 20 comporte, en partant du centre de la fibre vers la gaine, une partie centrale 21 présentant un indice, ou plus exactement une différence d'indice $\Delta n_1$ sensiblement constante, jusqu'à un rayon $r_1$. L'indice $\Delta n_1$ est inférieur ou sensiblement égal à l'indice $n_c$ de la silice de la gaine 25. La fibre présente ensuite une zone périphérique 22 d'indice $\Delta n_2$ sensiblement constant et supérieur ou égal à l'indice de la gaine 25, pour les rayons $r_1$ à $r_2$. Autour de la zone périphérique 22 se trouve une zone intermédiaire 23 d'indice $\Delta n_3$ inférieur ou égal à celui de la gaine 25, s'étendant entre les rayons $r_2$ et $r_3$. Enfin, entre la zone intermédiaire 23 et la gaine 25, la fibre comporte un anneau 24 d'indice $\Delta n_4$ s'étendant entre les rayons $r_3$ et $r_4$. Les paramètres caractéristiques de deux exemples de fibres selon l'invention correspondant au profil de la figure 2 sont donnés dans le Tableau 3, et les caractéristiques de propagation respectives de ces fibres sont données dans les lignes correspondantes du Tableau 4.

Tableau 3

| $r_1$ ($\mu$m) | $r_2$ ($\mu$m) | $r_3$ ($\mu$m) | $r_4$ ($\mu$m) | $10^3.\Delta n_1$ | $10^3.\Delta n_2$ | $10^3.\Delta n_3$ | $10^3.\Delta n_4$ |
|---|---|---|---|---|---|---|---|
| 3,99 | 5,71 | 13,86 | 16,3 | 0 | 11,35 | -3,4 | 2,25 |
| 2,13 | 3,55 | 5,68 | 7,1 | 0 | 11,7 | -2,35 | 5,85 |

Tableau 4

| $\lambda_c$(nm) | $\lambda_o$(nm) | DC/d$\lambda$ (ps/nm$^2$.km) | DC (ps/nm.km) | $2W_{02}$ ($\mu$m) | $S_{eff}$($\mu$m$^2$) | $S_c$ (dB) | $S_{\mu c}$ |
|---|---|---|---|---|---|---|---|
| 1710 | 1460 | 0,084 | 8 | 8,7 | 137 | $< 10^{-5}$ | 1,3 |
| 1705 | 1455 | 0,081 | 8 | 10 | 102 | $< 10^{-5}$ | 1 |

De manière plus générale, on peut considérer que l'on peut choisir les paramètres des fibres selon l'invention présentant un profil du type coaxial + anneau de la manière suivante pour satisfaire aux exigences de l'invention :

$$-7.10^{-3} \leq \Delta n_1 \leq 0,5.10^{-3}$$

$$10.10^{-3} \leq \Delta n_2 \leq 17.10^{-3}$$

$$-7.10^{-3} \leq \Delta n_3 \leq -2.10^{-3}$$

$$1.10^{-3} \leq \Delta n_4 \leq 6.10^{-3}$$

Le choix des différences d'indice dans les intervalles ci-dessus peut conduire pour les rayons aux intervalles suivants :

$$0,4 \leq r_1/r_2 \leq 0,7$$

$$0,3 \leq r_2/r_4 \leq 0,6$$

$$0,6 \leq r_3/r_4 \leq 0,9$$

$$6\,\mu m \leq r_4 \leq 17\,\mu m$$

Les fibres présentant des profils du type de celui de la figure 2 présentent les mêmes avantages que celles du type de la figure 1.

L'invention peut être fabriquée par l'homme du métier à l'aide de techniques connues, comme le MCVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Ainsi, l'invention a été décrite dans son application préférée à la compensation de la dispersion dans les systèmes de transmission en multiplexage de longueurs d'ondes. Elle est aussi susceptible d'autres applications.

Les profils des figures 1 et 2 constituent un exemple permettant de mettre en oeuvre l'invention. D'autres profils peuvent aussi permettre d'atteindre les valeurs de pente et de dispersion proposées dans l'invention.

## Revendications

1. Fibre optique monomode à dispersion décalée, présentant une surface effective supérieure à 100 $\mu m^2$, et des pertes par courbure faibles, **caractérisée en ce qu'**elle présente un profil d'indice (10) avec un coeur (11, 12, 13, 14) entouré d'une gaine optique (15), ledit coeur comprenant, disposés de manière coaxiale en partant de l'axe de la fibre :

   une partie centrale en forme de trapèze (11),
   une zone intermédiaire (12) d'indice inférieur à l'indice maximal ($11_1$) de la partie centrale, et
   un anneau (13) d'indice inférieur à l'indice maximal de la partie centrale et supérieur à celui de la zone intermédiaire,

   ledit profil étant choisi pour que la longueur d'onde $\lambda_0$ d'annulation de la dispersion chromatique soit comprise entre 1400 et 1480 nm.

2. Fibre selon la revendication 1, **caractérisée en ce que** la longueur d'onde $\lambda_0$ d'annulation de la dispersion chromatique est comprise entre 1450 et 1480 nm.

3. Fibre selon l'une des revendications 1 ou 2, **caractérisée en ce qu'**elle présente une dispersion chromatique comprise entre 7,5 et 10 ps/nm.km pour une longueur d'onde de 1550 nm.

4. Fibre selon l'une des revendications 1 à 3, **caractérisée en ce qu'**elle présente une surface effective comprise entre 110 et 125 $\mu m^2$.

5. Fibre selon l'une des revendications 1 à 4, **caractérisée en ce qu'**elle présente une atténuation inférieure ou égale à 0,1 dB à une longueur d'onde de 1670 nm, pour un enroulement de 100 tours de fibre autour d'un rayon de 30 mm.

6. Fibre selon l'une des revendications 1 à 5, **caractérisée en ce que** le profil présente entre l'anneau et la gaine une seconde zone intermédiaire (14) d'indice inférieur ou égal à celui de la gaine.

7. Fibre selon l'une des revendications 5 ou 6 **caractérisée en ce que**:

• la différence d'indice entre ladite partie centrale et ladite gaine est comprise entre $9.10^{-3}$ et $17.10^{-3}$,
• la différence d'indice entre ledit anneau et ladite gaine est comprise entre $3.10^{-3}$ et $10,5.10^{-3}$, et
• la différence d'indice entre ladite zone intermédiaire et ladite gaine est comprise entre $-0,5.10^{-3}$ et $0,5.10^{-3}$.

**8.** Fibre selon la revendication 7, **caractérisée par le fait que** ladite zone intermédiaire est comprise entre les rayons $r_1$ et $r_2$ dudit profil, et que ledit anneau est compris entre les rayons $r_2$ et $r_3$ dudit profil, avec

$$0,35 < r_1/r_3 < 0,5$$

$$0,55 < r_2/r_3 < 0,85$$

$$5 \, \mu m < r_3 < 7,5 \, \mu m.$$

**9.** Fibre optique monomode à dispersion décalée, présentant une surface effective, supérieure à $100 \, \mu m^2$ et des pertes par courbure faibles, **caratérisée en ce qu'**elle présente un profil d'indice (20) avec un coeur (21, 22, 23, 24) entouré d'une gaine optique (25), ledit coeur comprenant, disposés de manière coaxiale en partant de l'axe de la fibre :

    • une partie centrale (21) d'indice inférieur ou égal à celui de la gaine,
    • une zone périphérique (22) d'indice supérieur à celui de la partie centrale
    • une zone intermédiaire (23) d'indice inférieur à celui de la partie centrale et
    • un anneau (24) d'indice supérieur à celui de la gaine,

ledit profil étant choisi pour que la longueur d'onde $\lambda_0$ d'annulation de la dispersion chromatique soit comprise entre 1400 et 1480 nm.

**10.** Fibre selon la revendication 9, **caractérisée en ce que** la longueur d'onde $\lambda_0$ d'annulation de la dispersion chromatique est comprise entre 1450 et 1480 nm.

**11.** Fibre selon l'une des revendications 9 et 10, **caractérisée en ce qu'**elle présente une dispersion chromatique comprise entre 7,5 et 10 ps/nm.km pour une longueur d'onde de 1550 nm.

**12.** Fibre selon l'une des revendications 9 à 11, **caractérisée en ce qu'**elle présente une surface effective comprise entre 110 et 125 $\mu m^2$.

**13.** Fibre selon l'une des revendications 9 à 12, **caractérisée en ce qu'**elle présente une atténuation inférieure ou égale à 0,1 dB à une longueur d'onde de 1670 nm, pour un enroulement de 100 tours de fibre autour d'un rayon de 30 mm.

**14.** Fibre selon la revendication 9 **caractérisée en ce que** :

    • la différence d'indice entre la partie centrale et la gaine est comprise entre $-7.10^{-3}$ et $0,5.10^{-3}$,
    • la différence d'indice entre ladite zone périphérique et la gaine est comprise entre $10.10^{-3}$ et $17.10^{-3}$,
    • la différence d'indice entre ladite zone intermédiaire et la gaine est comprise entre $-7.10^{-3}$ et $-2.10^{-3}$ et
    • la différence d'indice entre ledit anneau et la gaine est comprise entre $1.10^{-3}$ et $6.10^{-3}$

**15.** Fibre selon la revendication 14, **caractérisée par le fait que** ladite zone périphérique est comprise entre les rayons $r_1$ et $r_2$ dudit profil, ladite zone intermédiaire est comprise entre les rayons $r_2$ et $r_3$ dudit profil, ledit anneau est compris entre les rayons $r_3$ et $r_4$ dudit profil, avec

$$0,4 < r_1/r_2 < 0,7$$

$$0,3 < r_2/r_4 < 0,6$$

$$0,6 < r_3/r_4 < 0,9$$

$$6\,\mu m < r_4 < 17\,\mu m \,.$$

**Claims**

1. Dispersion-shifted, single-mode optical fibre having an effective area greater than 100 $\mu m^2$ and low bending losses, **characterised in that** it has an index profile (10) having a core (11, 12, 13, 14) surrounded by an optical cladding (15), said core comprising, arranged coaxially starting from the axis of the fibre:

   • a central portion in the shape of a trapezium (11),
   • an intermediate zone (12) having an index less than the maximum index ($11_1$) of the central portion, and
   • a ring (13) having an index less than the maximum index of the central portion and greater than that of the intermediate zone,

   said profile being so selected that the zero-chromatic-dispersion wavelength $\lambda_0$ is between 1400 and 1480 nm inclusive.

2. Fibre according to claim 1, **characterised in that** the zero-chromatic-dispersion wavelength $\lambda_0$ is between 1450 and 1480 nm inclusive.

3. Fibre according to one of claims 1 or 2, **characterised in that** it has a chromatic dispersion between 7.5 and 10 ps/nm.km inclusive for a wavelength of 1550 nm.

4. Fibre according to one of claims 1 to 3, **characterised in that** it has an effective area of between 110 and 125 $\mu m^2$ inclusive.

5. Fibre according to one of claims 1 to 4, **characterised in that** it has an attenuation less than or equal to 0.1 dB at a wavelength of 1670 nm, for a winding of 100 turns of fibre around a radius of 30 mm.

6. Fibre according to one of claims 1 to 5, **characterised in that** the profile comprises, between the ring and the cladding, a second intermediate zone (14) having an index less than or equal to that of the cladding.

7. Fibre according to one of claims 5 or 6, **characterised in that**:

   • the difference in index between said central portion and said cladding is between $9 \times 10^{-3}$ and $17 \times 10^{-3}$ inclusive,
   • the difference in index between said ring and said cladding is between $3 \times 10^{-3}$ and $10.5 \times 10^{-3}$ inclusive, and
   • the difference in index between said intermediate zone and said cladding is between $-0.5 \times 10^{-3}$ and $0.5 \times 10^{-3}$ inclusive.

8. Fibre according to claim 7, **characterised in that** said intermediate zone is included between radii $r_1$ and $r_2$ of said profile, and **in that** said ring is included between radii $r_2$ and $r_3$ of said profile, wherein

$$0.35 < r_1/r_3 < 0.5$$

$$0.55 < r_2/r_3 < 0.85$$

$$5 \ \mu m < r_3 < 7.5 \ \mu m.$$

9. Dispersion-shifted, single-mode optical fibre having an effective area greater than 100 $\mu m^2$ and low bending losses, **characterised in that** it has an index profile (20) having a core (21, 22, 23, 24) surrounded by an optical cladding (25), said core comprising, arranged coaxially starting from the axis of the fibre:

- a central portion (21) having an index less than or equal to that of the cladding,
- a peripheral zone (22) having an index greater than that of the central portion,
- an intermediate zone (23) having an index less than that of the central portion, and
- a ring (24) having an index greater than that of the cladding,

said profile being so selected that the zero-chromatic-dispersion wavelength $\lambda_0$ is between 1400 and 1480 nm inclusive.

10. Fibre according to claim 9, **characterised in that** the zero-chromatic-dispersion wavelength $\lambda_0$ is between 1450 and 1480 nm inclusive.

11. Fibre according to one of claims 9 and 10, **characterised in that** it has a chromatic dispersion between 7.5 and 10 ps/nm.km inclusive for a wavelength of 1550 nm.

12. Fibre according to one of claims 9 to 11, **characterised in that** it has an effective area of between 110 and 125 $\mu m^2$ inclusive.

13. Fibre according to one of claims 9 to 12, **characterised in that** it has an attenuation less than or equal to 0.1 dB at a wavelength of 1670 nm, for a winding of 100 turns of fibre around a radius of 30 mm.

14. Fibre according to claim 9, **characterised in that**:

- the difference in index between the central portion and the cladding is between $-7 \times 10^{-3}$ and $0.5 \times 10^{-3}$ inclusive,
- the difference in index between said peripheral zone and the cladding is between $10 \times 10^{-3}$ and $17 \times 10^{-3}$ inclusive,
- the difference in index between said intermediate zone and the cladding is between $-7 \times 10^{-3}$ and $-2 \times 10^{-3}$ inclusive and
- the difference in index between said ring and the cladding is between $1 \times 10^{-3}$ and $6 \times 10^{-3}$ inclusive.

15. Fibre according to claim 14, **characterised in that** said peripheral zone is included between radii $r_1$ and $r_2$ of said profile, said intermediate zone is included between radii $r_2$ and $r_3$ of said profile and said ring is included between radii $r_3$ and $r_4$ of said profile, wherein

$$0.4 < r_1/r_2 < 0.7$$

$$0.3 < r_2/r_4 < 0.6$$

$$0.6 < r_3/r_4 < 0.9$$

$$6 \ \mu m < r_4 < 17 \ \mu m.$$

**Patentansprüche**

1.  Dispersionsverschobene Monomode-Lichtleitfaser mit einer wirksamen Oberfläche von mehr als 100 $\mu m^2$ und geringen Krümmungsverlusten,
    **dadurch gekennzeichnet, dass** sie ein Indexprofil (10) mit einem Kern (11, 12, 13, 14) aufweist, der von einer optischen Hülle (15) umgeben ist, wobei der Kern ausgehend von der Achse der Faser koaxial angeordnet aufweist :

    - einen zentralen Bereich in Form eines Trapezes (11),
    - eine Zwischenzone (12) mit einem niedrigeren Index als der maximale Index ($11_1$) des zentralen Bereichs, und
    - einen Ring (13) mit einem niedrigeren Index als der maximale Index des zentralen Bereichs und höher als derjenige der Zwischenzone,

    wobei das Profil so gewählt wird, dass die Wellenlänge $\lambda_0$ der Aufhebung der chromatischen Dispersion zwischen 1400 und 1480 nm liegt.

2.  Faser nach Anspruch 1, **dadurch gekennzeichnet, dass** die Wellenlänge $\lambda_0$ der Aufhebung der chromatischen Dispersion zwischen 1450 und 1480 nm liegt.

3.  Faser nach einem der Ansprüche 1 oder 2, **dadurch gekennzeichnet, dass** sie eine chromatische Dispersion zwischen 7,5 und 10 ps/nm.km für eine Wellenlänge von 1550 nm aufweist.

4.  Faser nach einem der Ansprüche 1 bis 3, **dadurch gekennzeichnet, dass** sie eine wirksame Oberfläche zwischen 110 und 125 $\mu m^2$ aufweist.

5.  Faser nach einem der Ansprüche 1 bis 4, **dadurch gekennzeichnet, dass** sie eine Dämpfung von weniger als oder gleich 0,1 dB bei einer Wellenlänge von 1670 nm für eine Wicklung von 100 Faserumdrehungen um einen Radius von 30 mm hat.

6.  Faser nach einem der Ansprüche 1 bis 5, **dadurch gekennzeichnet, dass** das Profil zwischen dem Ring und der Hülle eine zweite Zwischenzone (14) mit einem Index von weniger als oder gleich demjenigen der Hülle aufweist.

7.  Faser nach einem der Ansprüche 5 oder 6, **dadurch gekennzeichnet, dass**:

    - die Indexdifferenz zwischen dem zentralen Bereich und der Hülle zwischen $9.10^{-3}$ und $17.10^{-3}$ liegt,
    - die Indexdifferenz zwischen dem Ring und der Hülle zwischen $3.10^{-3}$ und $10,5.10^{-3}$ liegt, und
    - die Indexdifferenz zwischen der Zwischenzone und der Hülle zwischen $-0,5.10^{-3}$ und $0,5.10^{-3}$ liegt.

8.  Faser nach Anspruch 7, **dadurch gekennzeichnet, dass** die Zwischenzone zwischen den Radien $r_1$ und $r_2$ des Profils liegt, und dass der Ring zwischen den Radien $r_2$ und $r_3$ des Profils liegt, mit

$$0,35 < r_1/r_3 < 0,5$$

$$0,55 < r_2/r_3 < 0,85$$

$$5 \ \mu m < r_3 < 7,5 \mu m.$$

9.  Dispersionsverschobene Monomode-Lichtleitfaser mit einer wirksamen Oberfläche von mehr als 100 $\mu m^2$ und geringen Krümmungsverlusten,
    **dadurch gekennzeichnet, dass** sie ein Indexprofil (20) mit einem Kern (21, 22, 23, 24) aufweist, der von einer optischen Hülle (25) umgeben ist, wobei der Kern ausgehend von der Achse der Faser koaxial angeordnet aufweist :

    - einen zentralen Bereich (21) mit einem niedrigeren oder gleichen Index wie die Hülle,
    - eine Umfangszone (22) mit einem höheren Index als der zentrale Bereich,

- eine Zwischenzone (23) mit einem niedrigeren Index als der zentrale Bereich, und
- einen Ring (24) mit einem höheren Index als die Hülle,

wobei das Profil so gewählt wird, dass die Wellenlänge $\lambda_0$ der Aufhebung der chromatischen Dispersion zwischen 1400 und 1480 nm liegt.

**10.** Faser nach Anspruch 9, **dadurch gekennzeichnet, dass** die Wellenlänge $\lambda_0$ der Aufhebung der chromatischen Dispersion zwischen 1450 und 1480 nm liegt.

**11.** Faser nach einem der Ansprüche 9 und 10, **dadurch gekennzeichnet, dass** sie eine chromatische Dispersion zwischen 7,5 und 10 ps/nm.km für eine Wellenlänge von 1550 nm aufweist.

**12.** Faser nach einem der Ansprüche 9 bis 11, **dadurch gekennzeichnet, dass** sie eine wirksame Oberfläche zwischen 110 und 125 $\mu m^2$ aufweist.

**13.** Faser nach einem der Ansprüche 9 bis 12, **dadurch gekennzeichnet, dass** sie eine Dämpfung von weniger als oder gleich 0,1 dB bei einer Wellenlänge von 1670nm für eine Wicklung von 100 Faserumdrehungen um einen Radius von 30 mm hat.

**14.** Faser nach Anspruch 9, **dadurch gekennzeichnet, dass**:

- die Indexdifferenz zwischen dem zentralen Bereich und der Hülle zwischen $-7.10^{-3}$ und $0,5.10^{-3}$ liegt,
- die Indexdifferenz zwischen der Umfangszone und der Hülle zwischen $10.10^{-3}$ und $17.10^{-3}$ liegt,
- die Indexdifferenz zwischen der Zwischenzone und der Hülle zwischen $-7.10^{-3}$ und $-2.10^{-3}$ liegt, und
- die Indexdifferenz zwischen dem Ring und der Hülle zwischen $1.10^{-3}$ und $6.10^{-3}$ liegt.

**15.** Faser nach Anspruch 14, **dadurch gekennzeichnet, dass** die Umfangszone zwischen den Radien $r_1$ und $r_2$ des Profils liegt, die Zwischenzone zwischen den Radien $r_2$ und $r_3$ des Profils liegt, der Ring zwischen den Radien $r_3$ und $r_4$ des Profils liegt, mit

$$0,4 < r_1/r_2 < 0,7$$

$$0,3 < r_2/r_4 < 0,6$$

$$0,6 < r_3/r_4 < 0,9$$

$$6 \ \mu m < r_4 < 17 \ \mu m.$$

FIG_1

FIG_2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0789255 A